# EUROPÄISCHE PATENTSCHRIFT

(11) **EP 0 864 779 B1**
(45) Veröffentlichungstag und Bekanntmachung des Hinweises auf die Patenterteilung: **17.10.2001**
(21) Anmeldenummer: 98101992.0
(22) Anmeldetag: 05.02.1998
(51) Int. Cl.: F16H 48/08, F16H 57/02

(54) **Ausgleichsgetriebe,insbesondere für den Achsantrieb eines Kraftfahrzeugs**
Differential,particularly for the axle drive of a motor vehicle
Différentiel,en particulier pour l'entraînement d'un essieu d'un véhicule à moteur

(30) Priorität: 12.03.1997 DE 19710090
(43) Veröffentlichungstag der Anmeldung: 16.09.1998
(73) Patentinhaber: Volkswagen Aktiengesellschaft, 38436 Wolfsburg (DE)
(72) Erfinder: Ullrich, Klaus, 38442 Wolfsburg (DE); Schäfer, Michael, Dipl.-Ing., 38518 Gifhorn (DE); Franz, Reinhold, 38518 Gifhorn (DE); Gröhlich, Hubert, 38154 Königslutter (DE)

(56) Entgegenhaltungen:
- EP-A- 0 683 333
- DE-A- 3 814 205
- DE-A- 4 313 322
- DE-C- 936 844
- DE-C- 19 546 331
- FR-A- 2 225 052

## Beschreibung

Die Erfindung betrifft ein Ausgleichsgetriebe gemäß dem Oberbegriff des Patentanspruch 1.

Derartige Ausgleichsgetriebe bieten auch dann, wenn ihr Gehäuse, wie beispielsweise die DE 195 46 331 C1 zeigt, aus zwei aus Blech gefertigten Gehäuseteilen zusammengesetzt ist, Schwierigkeiten hinsichtlich der Montage, da alle aktiven Teile des Ausgleichsgetriebes in den einen topfartig gestalteten Gehäuseteil eingesetzt und festgelegt werden müssen.

Dies gilt auch für das Kegelradausgleichsgetriebe gemäß der DE 38 14 205 C2, bei dem innerhalb eines zusätzlichen Gehäuses, in das ein Antriebsritzel hineingeführt ist, ein gehäuseähnlicher Differentialkorb eingebaut ist, der einen zylindrischen Bereich aufweist, der innenseitig Längsnuten zur in Umfangsrichtung erfolgenden Festlegung des Achsbolzens aufweist.

Das Differential nach der DE 43 13 322 A1 besitzt die Eigenschaft, daß sein Gehäuse von den durch die kegelige Verzahnung der Ausgleichs- und der Achswellenräder verursachten Kräften freigestellt ist. Dies ermöglicht die Herstellung des Getriebegehäuses aus dünnwandigen Blechen. Die definierte Kräftefreiheit wird dadurch erreicht, daß die Achswellenräder in einem separaten, die in Richtung der Achsantriebswellen wirkenden Kräfte aufnehmenden Käfig gelagert sind, wobei sich die in Richtung des Achsbolzens wirkenden Kräfte zum Teil direkt am Antriebsrad abstützen. Der zusätzlich zum Gehäuse vorhandene Käfig erlaubt das Einsetzen der Achswellenräder und des Achsbolzens, bevor das gesamte Differential montiert wird.

Wie aber die gattungsgemäße EP 0 683 333 A1 belegt, wird diese Montagevereinfachung offensichtlich mit konstruktiven Schwierigkeiten hinsichtlich des Käfigs erkauft, der in Folge des Vorhandenseins von Durchtrittsöffnungen nur schwer so ausgelegt werden kann, daß zwischen erforderlicher Stabilität und einfacher Herstellung ein optimaler Kompromiß gefunden werden kann. Die angeführte EP befaßt sich nämlich mit der konstruktiven Ausbildung des besagten Käfigs und sieht zur Erreichung des gesteckten Ziels komplizierte Formungsvorgänge an einem rohrabschnittförmigen Käfig vor.

Der Erfindung liegt die Aufgabe zugrunde, ein gattungsgemäßes Ausgleichsgetriebe zu schaffen, das einerseits montagefreundlich ist, also eine Vormontage aktiver Getriebeteile zuläßt, andererseits für den Käfig aber komplizierte Herstellungsprozesse vermeidet.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung geht von der Erkenntnis aus, daß es erheblich günstiger ist, die von den Achsantriebsrädem in Richtung der Getriebelängsachse ausgeübten Kräfte vom Getriebegehäuse aufnehmen zu lassen, da dann der Käfig diesbezüglich nur die zum Zusammenhalten der verschiedenen aktiven Bestandteile des Getriebes während der Montage erforderlichen Kräfte aufzubringen braucht. Der erfindungsgemäße Käfig stellt somit eine Montagehilfe dar.

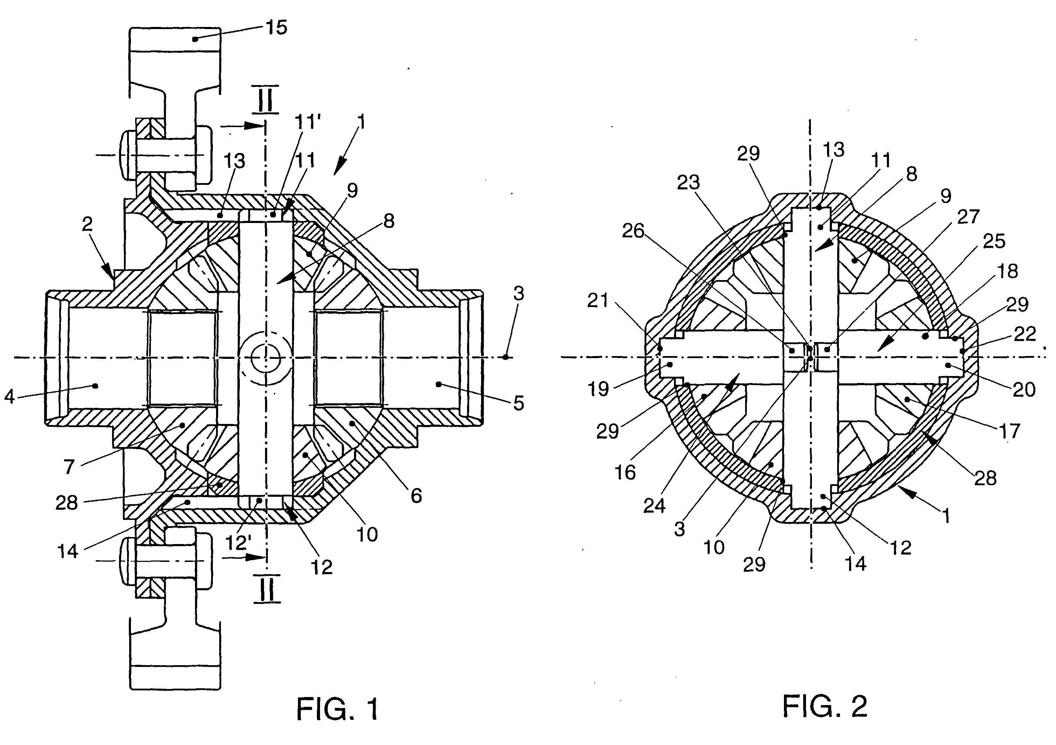

Ein Ausführungsbeispiel der Erfindung wird im folgenden anhand der Zeichnung erläutert, deren Figur 1 einen Längsschnitt und deren Figur 2 die in Figur 1 bei II-II gekennzeichnete Schnittansicht wiedergibt.

Das Gehäuse des Ausgleichsgetriebes besteht aus dem topfförmigen einen Gehäuseteil 1 und dem deckelartigen anderen Gehäuseteil 2; beide definieren die Gehäuselängsachse 3, längs der zu den angetriebenen Rädern des Kraftfahrzeugs führende, hier nicht dargestellte Achsantriebswellen in Ausnehmungen 4 und 5 verlaufen. Auf ihnen sind als Kegelzahnräder ausgebildete Antriebszahnräder 6 und 7 drehfest angeordnet, die sich in Richtung der Getriebelängsachse 3 an den Gehäuseteilen 1 und 2 abstützen.

Die Gehäuseteile bestehen im Hinblick auf die Beanspruchungen des Gehäuses zweckmäßigerweise nicht aus einem Gußmaterial, sondern sind durch Tiefziehen, Schmieden oder Kaltfließpressen hergestellt.

Senkrecht zu der Längsachse 3 verläuft der Achsbolzen 8, der drehbar die beiden Ausgleichsräder 9 und 10 trägt; wie Figur 1 deutlich erkennen läßt, erstrecken sich die beiden Ausgleichsräder 9 und 10 in einer die Längsachse 3 enthaltenden Ebene zwischen den beiden Achsantriebsrädem 6 und 7, mit denen sie kämmen. Die freien äußeren Endbereiche 11 und 12 des Achsbolzens 8 ragen in Längsnuten 13 und 14 des Gehäuseteils 1 hinein und sind gegen Verdrehung durch Abflachungen 11' und 12' gesichert, so daß sie an durch Aufbringen von Kräften auf das Antriebszahnrad 15 hervorgerufenen Drehbewegungen des Getriebegehäuses um die Längsachse 3 teilnehmen. Die Nuten 13 und 14 sind in Richtung nach links, d. h. in Richtung auf den anderen Gehäuseteil 2 zu, offen, so daß das Einführen der Endbereiche 11 und 12 von links her vor dem Aufsetzen des Gehäuseteils 2 möglich ist.

Wie Figur 2 zeigt, sind in diesem Ausführungsbeispiel vier Ausgleichsräder 9, 10 sowie 16 und 17 vorhanden, die mit den beiden Achsantriebsrädem 6 und 7 kämmen, wie dies Figur 1 für die beiden Ausgleichsräder 9 und 10 zeigt. Die Zahl der Ausgleichsräder ist abhängig von dem jeweils zu übertragenden Drehmoment. Zur Lagerung der Ausgleichsräder 16 und 17 dient der weitere Achsbolzen 18, der senkrecht zu dem bereits beschriebenen Achsbolzen 8 verläuft, mit seiner Achse dessen Achse im Bereich der Getriebelängsachse 3 durchsetzt und der mit seinen äußeren Endbereichen 19 und 20 ebenfalls in längsverlaufenden Nuten 21 und 22 des Gehäuseteils 1 in Umfangsrichtung festgelegt ist. Während der bereits beschriebene Achsbolzen 8 durch ein einziges Teil gebildet ist, das im Bereich der Längsachse 3 mit einer Querbohrung 23 (oder zwei Sacklöchem) versehen ist, wird der andere Achsbolzen 18 durch zwei Halbbolzen 24 und 25 dargestellt. Sie besitzen an ihren inneren Enden Endzapfen 26 und 27, mit denen sie in die Querbohrung 23 hineinragen.

Erfindungsgemäß sind die Ausgleichsräder 9, 10, 16 und 17 sowie die beiden Achsbolzen 8 und 18 dadurch zu einer Montageeinheit zusammengefaßt, daß die genannten vier Räder von dem ringförmigen Käfig 28 umschlossen werden, der mit Durchtrittsöffnungen 29 für die Achswellen 8 und 18 bzw. deren Endbereiche versehen ist. Infolge der anhand Figur 2 beschriebenen Gestaltung der beiden Achsbolzen 8 und 18 ist es möglich, diese vor dem Einsetzen des Käfigs 28 in den Gehäuseteil 1 radial von außen in den Käfig einzuführen, in dem sich dann bereits die Ausgleichsräder 9, 10, 16 und 17 befinden. Dann wird diese Vormontageeinheit in Figur 1 von links her in den Gehäuseteil 1 eingeführt, wobei die Achsbolzen-endbereiche 11, 12, 19 und 20 in den Längsnuten 13, 14, 21 und 22 bis zum Anschlagen gleiten. Wie Figur 1 zeigt, ist in diesem Ausführungsbeispiel der Käfig 28 nach dem Aufsetzen des anderen Gehäuseteils 2 im Getriebegehäuse radial und axial abgestützt, und da er sich nicht über die Achsantriebsräder 6 und 7 erstreckt, ist er im Betrieb des Ausgleichsgetriebe praktisch kräftefrei. Er muß an seiner Innenseite lediglich anlaufscheibenartig so ausgebildet sein, daß er Drehbewegungen der Ausgleichsräder 9,10, 16 und 17 nicht behindert.

Es sei aber darauf hingewiesen, daß der Käfig im Gehäuse durch Vorsehen von Spalten auch schwimmend gelagert sein kann.

Mit der Erfindung ist demgemäß ein leicht zu montierendes gattungsgemäßes Ausgleichsgetriebe geschaffen, bei dem der definierte Käfig als Montagehilfe konstruktiv sehr leicht zu beherrschen ist.

## Patentansprüche

1. Ausgleichsgetriebe, insbesondere für den Achsantrieb eines Kraftfahrzeugs, mit einem zweiteiligen, ein Antriebszahnrad (15) tragenden Gehäuse (1, 2), das eine Getriebelängsachse (3) definiert, längs der in beiden Gehäuseteilen (1, 2) je eine Achswelle gelagert ist, die innerhalb des Gehäuses drehfest Achsantriebsräder (6, 7) tragen, die mit zwischen ihnen befindlichen Ausgleichsrädern (9, 10, 16, 17) kämmen, die ihrerseits drehbar und paarweise auf zumindest einem senkrecht zur der Längsachse (3) verlaufenden Achsbolzen (8) angeordnet sind, dessen radial nach außen weisende Endbereiche (11, 12) am Gehäuse (1, 2) festgelegt sind, und mit einem Durchtrittsöffnungen für den Achsbolzen aufweisenden, die Ausgleichsräder (9, 10, 16, 17) umschließenden Käfig (28), **dadurch gekennzeichnet, daß** die Endbereiche (11, 12) des zumindest einen Achsbolzens (8) an einem der Gehäuseteile (1) in im wesentlichen parallel zu der Längsachse (3) verlaufenden, in Richtung auf den anderen Gehäuseteil (2) offenen Nuten (13, 14) in Umfangsrichtung festgelegt sind, sich der Käfig (28) in Richtung der Längsachse (3) nur über die Ausgleichsräder (9, 10, 16, 17) erstreckt und diesen zu ihrer axialen Abstützung Anschläge an jeweils einem der beiden Gehäuseteile (1, 2) zugeordnet sind.

2. Ausgleichsgetriebe nach Anspruch 1, **dadurch gekennzeichnet, daß** bei Vorhandensein von vier Ausgleichsrädem (9, 10, 16, 17) in einer Querebene zwei sich im Bereich der Längsachse (3) kreuzende Achsbolzen (8, 18) vorgesehen sind, von denen einer diametral zwischen zugeordneten Nuten (13, 14) in dem einen Gehäuseteil (1) verläuft und im Bereich der Getriebelängsachse (3) mit einer Querbohrung (23) versehen ist, in die in Richtung auf die Längsachse (3) weisende Endzapfen (26, 27) an Bolzenhälften (24, 25) eingreifen, die zusammen den anderen Achsbolzen (18) bilden, dem ebenfalls Nuten (21, 22) in dem einen Gehäuseteil (1) zugeordnet sind.

3. Ausgleichsgetriebe nach Anspruch 1 oder 2, **dadurch gekennzeichnet, daß** die Gehäuseteile (1, 2) durch Tiefziehen, Schmieden oder Kaltfließpressen hergestellt sind.

4. Ausgleichsgetriebe nach einem der Ansprüche 1 bis 3, **dadurch gekennzeichnet, daß** der Käfig (28) in dem Gehäuse (1, 2) radial und axial abgestützt ist.

5. Ausgleichsgetriebe nach einem der Ansprüche 1 bis 3, **dadurch gekennzeichnet, daß** der Käfig (28) in dem Gehäuse (1, 2) in Richtung der Längsachse (3) schwimmend gelagert ist.

6. Ausgleichsgetriebe nach einem der Ansprüche 1 bis 5, **dadurch gekennzeichnet, daß** die Achsbolzen-Endbereiche (11, 12) zur Führung in den Nuten (13, 14) seitlich abgeflacht (11',12')sind.

## Claims

1. Differential gear, in particular for the axle drive of a motor vehicle, with a two-part housing (1, 2) which carries a driving gearwheel (15) and which defines a gear longitudinal axis (3), along which an axle shaft is mounted in each of the two housing parts (1, 2), which axle shafts carry fixedly in terms of rotation, within the housing, axle drive wheels (6, 7) which mesh with differential wheels (9, 10, 16, 17) which are located between them and are themselves arranged rotatably and in pairs on at least one axle pin (8) which runs perpendicularly to the longitudinal axis (3) and of which the end regions (11, 12) facing radially outwards are fixed to the housing (1, 2), and with a cage (28) having passage orifices for the axle pin and surrounding the differential wheels (9, 10, 16, 17), **characterized in that** the end regions (11, 12) of the at least one axle pin (8) are fixed in the circumferential direction to one of the housing parts (1) in grooves (13, 14) running essentially parallel to the longitudinal axis (3) and open in the direction of the other housing part (2), the cage (28) extends, in the direction of the longitudinal axis (3), only over the differential wheels (9, 10, 16, 17) and stops in each case on one of the two housing parts (1, 2) are assigned to these differential wheels for their axial support.

2. Differential gear according to Claim 1,
**characterized in that**, when four differential wheels (9, 10, 16, 17) are present in a transverse plane, two axle pins (8, 18) intersecting in the region of the longitudinal axis (3) are provided, one of which runs diametrically between associated grooves (13, 14) in the one housing part (1) and is provided in the region of the gear longitudinal axis (3) with a transverse bore (23), into which engage end tenons (26, 27) facing in the direction of the longitudinal axis (3), on pin halves (24, 25) which together form the other axle pin (18), to which grooves (21, 22) in the one housing part (1) are likewise assigned.

3. Differential gear according to Claim 1 or 2, **characterized in that** the housing parts (1, 2) are produced by deep-drawing, forging or cold extrusion.

4. Differential gear according to one of Claims 1 to 3, **characterized in that** the cage (28) is supported radially and axially in the housing (1, 2).

5. Differential gear according to one of Claims 1 to 3, **characterized in that** the cage (28) is mounted in the housing (1, 2) floatingly in the direction of the longitudinal axis (3).

6. Differential gear according to one of Claims 1 to 5, **characterized in that** the axle-pin end regions (11, 12) are flattened (11', 12') laterally for guidance in the grooves (13, 14).

## Revendications

1. Différentiel, en particulier pour l'entraînement d'un essieu d'un véhicule automobile, avec un boîtier en deux parties (1, 2) portant une roue dentée motrice (15), qui définit un axe longitudinal (3) du différentiel le long duquel un arbre d'essieu est supporté dans chacune des deux parties (1, 2) du boîtier, qui portent à l'intérieur du boîtier des roues d'entraînement d'essieu calées en rotation (6, 7), qui engrènent avec des roues de différentiel (9, 10, 16, 17) qui se trouvent entre elles, qui sont à leur tour disposées de façon rotative et par paires sur au moins un axe (8) orienté perpendiculairement à l'axe longitudinal (3), dont les zones terminales (11, 12) dirigées radialement vers l'extérieur sont fixées au boîtier (1, 2), et avec une cage (28) entourant les roues de différentiel (9, 10, 16, 17) et présentant des ouvertures de passage pour l'axe, **caractérisé en ce que** les zones terminales (11, 12) dudit au moins un axe (8) sont fixées en direction périphérique à une des parties (1) du boîtier, dans des rainures (13, 14) orientées sensiblement parallèlement à l'axe longitudinal (3) et ouvertes en direction de l'autre partie (2) du boîtier, **en ce que** la cage (28) ne s'étend dans la direction de l'axe longitudinal (3) qu'au-dessus des roues de différentiel (9, 10, 16, 17) et **en ce que** des butées sont associées à celles-ci, pour leur appui axial, chaque fois sur une des deux parties (1, 2) du boîtier.

2. Différentiel suivant la revendication 1,
**caractérisé en ce que**, en présence de quatre roues de différentiel (9, 10, 16, 17), il est prévu dans un plan transversal deux axes (8, 18) se croisant dans la région de l'axe longitudinal (3), dont l'un est placé diamétralement entre des rainures associées (13, 14) dans une première partie (1) du boîtier et est pourvu, dans la région de l'axe longitudinal (3) du différentiel, d'un alésage transversal (23) dans lequel s'engagent des tourillons d'extrémité (26, 27) formés sur des demi-axes (24, 25) et orientés en direction de l'axe longitudinal (3), qui forment ensemble l'autre axe (18), auquel sont également associées des rainures (21, 22) dans la première partie (1) du boîtier.

3. Différentiel suivant la revendication 1 ou 2,
**caractérisé en ce que** les parties (1, 2) du boîtier sont fabriquées par emboutissage profond, forgeage ou filage à froid.

4. Différentiel suivant l'une quelconque des revendications 1 à 3, **caractérisé en ce que** la cage (28) est appuyée dans le boîtier (1, 2) en direction radiale et axiale.

5. Différentiel suivant l'une quelconque des revendications 1 à 3, **caractérisé en ce que** la cage (28) est flottante dans le boîtier (1, 2) dans la direction de l'axe longitudinal (3).

6. Différentiel suivant l'une quelconque des revendications 1 à 5, **caractérisé en ce que** les zones terminales (11, 12) de l'axe sont aplaties latéralement (11', 12') pour le guidage dans les rainures (13, 14).
